# DEMANDE DE BREVET EUROPEEN

(11) **EP 3 486 451 A1**
(43) Date de publication de la demande: **22.05.2019**
(21) Numéro de dépôt: 18206561.5
(22) Date de dépôt: 15.11.2018
(51) Int. Cl.: F02B 39/14, F01M 13/04, F01M 9/10

(54) **SYSTÈME DE DEUX TURBOCOMPRESSEURS RELIÉS EN SÉRIE**

(30) Priorité: 15.11.2017 FR 1760759
(71) Demandeur: RENAULT s.a.s., 92100 Boulogne-Billancourt (FR)
(72) Inventeur: DUMAS, Eric, 78800 HOUILLES (FR); HOTTEBART, Pascal, 78780 MAURECOURT (FR)

(57) **Abrégé**

La présente invention se rapporte à un système de compression d'air de suralimentation d'un moteur de véhicule comprenant un premier turbocompresseur (10) et un deuxième turbocompresseur (20), avec chacun un compresseur (12, 22) relié à une turbine par un organe d'entrainement (13, 23) mécanique lubrifié ; ledit système (1) comprend une portion de circuit de retour d'huile de lubrification reliant le deuxième turbocompresseur (20) au premier turbocompresseur (10) et destinée à être connectée à un décanteur de gaz (30) de manière à former un circuit de retour d'huile reliant le deuxième puis le premier turbocompresseur en série au dit décanteur.

L'invention concerne également un véhicule comprenant un tel système.

## Description

La présente invention concerne le domaine de la suralimentation des moteurs thermiques.

Plus particulièrement, la présente invention concerne un moteur intégrant deux turbocompresseurs.

Dans un turbocompresseur, le rotor de la turbine est entrainé par les gaz d'échappement et est couplé mécaniquement à un rotor du compresseur, entrainant ce dernier en rotation, de sorte que le compresseur comprime de l'air et l'envoie dans les cylindres du moteur.

Le couplage mécanique est réalisé par un arbre enfermé dans un carter alimenté en huile, afin de lubrifier cet arbre. L'huile circule au travers de ce carter, qui comprend donc une conduite d'évacuation de l'huile. Cette conduite d'évacuation est reliée ensuite à un compartiment d'huile, généralement dans le bac d'huile du moteur, d'où l'huile est ensuite remise en circulation dans le circuit de lubrification de l'arbre.

Une telle conduite d'évacuation est souvent réalisée avec

Un conduit de 13 millimètres (mm)de section, surtout lorsque le circuit de circulation de l'huile est conçu pour fonctionner en dépression. Ce type de conduite d'évacuation est difficile à réaliser.

Dans le cas d'un moteur alimenté par deux turbocompresseurs, la difficulté est augmentée d'autant car deux conduites d'évacuation de ce type doivent être réalisées.

Le problème technique que vise à résoudre l'invention est donc de simplifier la mise en oeuvre d'un système de compression d'air de suralimentation avec un circuit de lubrification dans un véhicule.

A cet effet, un premier objet de l'invention est un système de compression d'air de suralimentation d'un moteur de véhicule comprenant un premier turbocompresseur et un deuxième turbocompresseur, chaque turbocompresseur comprenant une turbine, un compresseur relié à cette turbine par un organe d'entrainement mécanique, et un carter d'huile agencé autour de l'organe d'entrainement et comprenant une entrée d'huile et une sortie d'huile ; ce système comprend une portion de circuit de retour d'huile reliant le deuxième turbocompresseur au premier turbocompresseur et destinée à être connectée à un décanteur de gaz de manière à relier le deuxième puis le premier turbocompresseur en série au dit décanteur.

Ainsi, l'évacuation en huile du premier turbocompresseur peut se faire du premier au deuxième turbocompresseur par cette portion de circuit de retour d'huile. Il est donc possible de ne raccorder que le deuxième turbocompresseur au compartiment d'huile. Ainsi, malgré la présence de deux turbocompresseurs, lors de l'assemblage de ceux-ci dans le véhicule, on n'utilise qu'une seule conduite d'évacuation pour relier les carters des arbres des turbocompresseurs au compartiment d'huile. La mise en oeuvre de deux turbocompresseurs dans un véhicule est donc simplifiée.

Par ailleurs, l'encombrement du système de compression dans le véhicule n'est pas augmenté par la présence d'une conduite d'évacuation supplémentaire.

De plus, en reliant les deux turbocompresseurs au décanteur, le système de compression fonctionne en dépression, ce qui permet d'évacuer par aspiration les gaz qui sont passés dans les carters des turbocompresseurs, ces gaz étant encore couramment appelés gaz de blow-by, et de les séparer des gouttelettes d'huile qu'ils auraient pu entrainer.

Par ailleurs, comme les turbocompresseurs sont reliés en série au décanteur, une seule conduite est nécessaire pour relier les turbocompresseurs au décanteur. Les gaz pourront ainsi passer du deuxième au premier carter par ladite portion de circuit de retour d'huile, puis être ensuite évacués vers le décanteur.

Cette portion de circuit de retour d'huile, qui relie entre eux les turbocompresseurs, peut être une simple conduite, un ensemble de conduites, ou même comprendre d'autres organes mécaniques reliés fluidiquement en aval du premier turbocompresseur et en amont du deuxième turbocompresseur par rapport au sens de circulation de l'huile dans la portion de circuit de retour d'huile.

Le système de compression selon l'invention peut optionnellement présenter une ou plusieurs des caractéristiques suivantes :
- l'un des turbocompresseurs comprend une entrée de gaz principale et une entrée de gaz secondaire destinée à être reliée au décanteur de gaz ; cela permet de renforcer l'aspiration des gaz de blow-by ;
- la portion de circuit de retour d'huile relie une sortie d'huile du carter du premier turbocompresseur à un orifice du carter du deuxième turbocompresseur, dit orifice de liaison, l'orifice de liaison étant distinct de l'entrée d'huile du carter du deuxième turbocompresseur ; on peut ainsi avoir des circuits amenant l'huile pour lubrifier l'organe d'entrainement du deuxième turbocompresseur indépendant de la liaison entre les deux turbocompresseurs ;
- les premier et deuxième turbocompresseurs forment un ensemble de compression, le carter du premier turbocompresseur comprenant une sortie de gaz à distance de la sortie d'huile de ce carter et cette sortie de gaz formant l'unique évacuation de gaz hors de cet ensemble de compression ;
- les premier et deuxième turbocompresseurs forment un ensemble de compression, la sortie d'huile du carter du deuxième turbocompresseur formant l'unique évacuation d'huile hors de cet ensemble de compression.

Un autre objet de l'invention est un ensemble moteur comprenant un moteur thermique et un système de compression selon l'invention, dans lequel la portion de circuit de retour d'huile est connectée à un décanteur de gaz de manière à relier le deuxième turbocompresseur puis le premier turbocompresseur en série au dit décanteur de gaz.

Cet ensemble correspond ainsi à un moteur turbocompressé bénéficiant des avantages du système de compression selon l'invention.

Cet ensemble moteur selon l'invention peut optionnellement présenter une ou plusieurs des caractéristiques suivantes :
- dans cet ensemble moteur:
   o le moteur présente un compartiment d'huile relié à une pompe qui est agencée de manière à envoyer l'huile vers les entrées d'huile des carters des turbocompresseurs, et
   o la sortie d'huile du carter du deuxième turbocompresseur est reliée au compartiment d'huile sous le niveau d'huile de ce dernier ;
   ainsi, le retour de l'huile au compartiment d'huile se fait par aspiration ;
- l'un des turbocompresseurs comprend un conduit en amont de son compresseur permettant l'aspiration des gaz en une sortie du décanteur de gaz ; ainsi ce turbocompresseur est celui du premier étage de compression d'alimentation en air, turbocompresseur dit basse pression ; ce circuit permet la mise en dépression du décanteur de gaz et de l'ensemble du moteur au travers dudit décanteur de gaz ; cela permet de recycler directement les gaz de blow-by via le compresseur et de les mélanger au gaz comburant arrivant depuis une prise d'air, et d'envoyer le mélange vers les soupapes d'alimentation du moteur ;
- le deuxième turbocompresseur présente un carter de lubrification agencé autour de l'organe d'entrainement correspondant et en communication aéraulique avec une entrée du compresseur du deuxième turbocompresseur ;
- le premier et le deuxième turbocompresseurs sont agencés de manière à ce que l'huile s'évacue par gravité du carter du premier turbocompresseur jusque dans le carter du deuxième turbocompresseur ; cela améliore l'évacuation de l'huile.

Un autre objet de l'invention est un véhicule comprenant un système de compression et/ou un ensemble moteur selon l'invention.

Dans la présente demande, les termes « bas », « haut », « supérieur », et « sous » sont appliqués, sauf indication contraire, selon l'orientation de l'arbre d'entrainement ou du moteur tels qu'ils sont destinés à être montés sur le véhicule, dans les exemples illustrés.

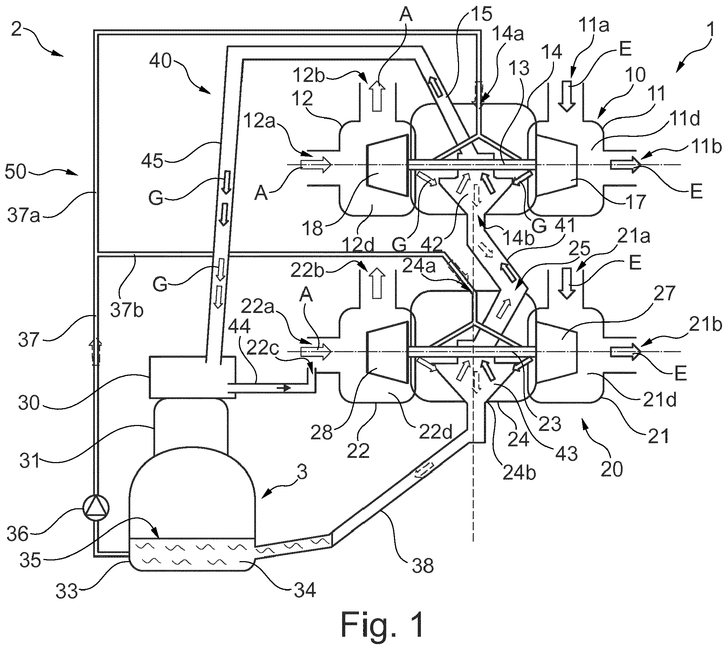

D'autres caractéristiques et avantages de l'invention apparaîtront à la lecture de la description détaillée d'un exemple non limitatif qui suit, pour la compréhension duquel on se reportera à la figure 1 annexée, qui est un schéma d'un ensemble moteur comprenant un exemple de système de compression selon l'invention.

Tel qu'illustré en figure 1, l'ensemble moteur 2 comprend un système de compression 1 relié au moteur 3 par des circuits d'huile et de gaz de blow-by. Cet ensemble moteur 2 est représenté tel qu'il est monté dans un véhicule.

Le système de compression 1 comprend un premier turbocompresseur 10 et un deuxième turbocompresseur 20. Ces deux turbocompresseurs sont reliés chacun indépendamment au moteur 3 pour le suralimenter en gaz, ici en air.

Chaque turbocompresseur 10, 20 comprend une turbine 11, 21, un compresseur 12, 22 relié à cette turbine par un organe d'entrainement 13, 23 mécanique, et un carter de lubrification 14, 24, encore appelé carter paliers, ici un carter paliers central, agencé autour de l'organe d'entrainement correspondant 13, 23.

Chaque turbine 11, 21 comprend une chambre de détente 11d, 21d reliée via une entrée 11a, 21a aux soupapes d'échappement (non représentées) du moteur 3 de manière à recevoir les gaz d'échappement E. A l'intérieur de la chambre de détente 11d, 21d un rotor 17, 27, tel qu'une roue à pales, est monté mobile en rotation sur une première extrémité de l'organe d'entrainement, ici un arbre 13, 23 d'entrainement.

Chaque rotor 17, 27 de turbine 11, 21 est agencé de manière à être entrainé par les gaz d'échappement E et de manière à ce que les gaz d'échappement E ressortent par une sortie 11b, 21b de cette chambre de détente. Ces gaz d'échappement E partent ensuite dans la ligne d'échappement, jusqu'au pot d'échappement lorsque l'ensemble moteur 2 est monté dans un véhicule.

Chaque compresseur 12, 22 comprend une chambre de compression 12d, 22d reliée via une entrée de gaz principale 12a, 22a à l'admission de gaz comburant, ici de l'air A. Par exemple, cette entrée de gaz principale 12a, 22a peut être connectée à une prise d'air provenant de l'extérieur du véhicule.

A l'intérieur de la chambre de compression 12d, 22d de chaque compresseur 12, 22, un rotor 18, 28, tel qu'une roue à pales, est monté mobile en rotation sur une deuxième extrémité de l'arbre 13, 23.

Chaque rotor 18, 28 de compresseur 12, 22 est entrainé en rotation par l'arbre 13, 23 correspondant, comprime ainsi l'air A arrivant dans la chambre de compression 12d, 22d, et l'envoie hors de cette dernière au travers d'une sortie 12b, 22b. Cette dernière est reliée aux soupapes d'admission (non représentées) du moteur 3 de manière à recevoir l'air A de suralimentation.

Un carter de lubrification, ci-après carter 14, 24, est agencé autour de chaque arbre 13, 23. Chaque carter 14, 24 comprend une chambre de lubrification (non apparente sur la figure 1).

Chaque chambre de lubrification est traversée de part en part par l'arbre 13, 23, de sorte que les chambres de compression 12d, 22d et de détente 11d, 21d, ainsi que les rotors 18, 28 et 17, 27 sont montés hors du carter correspondant 14, 24 et de part et d'autre de celui-ci. Il existe donc un passage entre chaque chambre 12d, 11d, 22d, 21d et la chambre de lubrification, passage au travers duquel passe l'arbre 13, 23 correspondant.

Cette chambre de lubrification est alimentée en huile par un circuit de lubrification 50 amenant une partie de l'huile puisée dans une nappe d'huile 34 contenue au fond du compartiment d'huile, ici un bac 33 d'huile, aménagé au fond du moteur 3.

Une pompe 36 aspire cette huile et l'envoie dans un conduit principal 37, qui se divise ensuite en deux conduits secondaires 37a, 37b branchés respectivement sur une entrée d'huile 14a du carter 14 du premier turbocompresseur 10, ci-après premier carter 14, et sur une entrée d'huile 24a du carter 24 du deuxième turbocompresseur 20, ci-après deuxième carter 24. Chacune de ces entrées d'huile 14a, 24a communique avec la chambre de lubrification correspondante. Les arbres 13, 23 sont ainsi lubrifiés.

Les entrées d'huile 14a, 24a sont ici en haut du carter 14, 24 correspondant.

Ici, dans chacun des carter 14, 24, l'huile s'écoule de l'arbre 13, 23 correspondant dans un collecteur 42, 43.

Ces collecteurs 42, 43 sont reliés en série au bac 33 de manière à former le circuit de retour d'huile au moteur 3. L'huile s'évacue de chaque collecteur 42, 43 via une sortie d'huile 14b, 24b du carter 14, 24 correspondant.

Une liaison fluidique, ici un conduit de liaison 41, relie la sortie d'huile 14b du premier carter 14 à un orifice du deuxième carter 24, dit orifice de liaison 25, distinct de l'entrée d'huile 24a du deuxième carter 24.

Cet orifice de liaison 25 est en communication avec le collecteur 43 du deuxième carter 24. Ainsi, le système de compression 1 est agencé de manière à ce que l'huile s'évacue du premier carter 14 jusque dans le deuxième carter 24.

Dans l'exemple illustré, cette évacuation se fait par écoulement. En effet, dans cet exemple, le premier turbocompresseur 10 est situé à une hauteur supérieure de celle du deuxième turbocompresseur 20. Notamment, la sortie d'huile 14b du premier carter 14 est en bas de ce dernier et à une hauteur supérieure à l'orifice de liaison 25, qui lui est en haut du deuxième carter 24.

Les deux turbocompresseurs 10, 20 forment ainsi un ensemble de compression dont le retour d'huile au moteur 3 se fait par la sortie d'huile 24b du deuxième turbocompresseur 20, via une conduite commune 38 de retour d'huile.

Ici cette conduite commune 38 est connectée au bac 33 sous le niveau 35 de la nappe d'huile 34. Ainsi, le retour d'huile fonctionne en dépression.

Les passages de l'arbre 13, 23 au travers du carter 14, 24 correspondant sont agencés de manière à réaliser, notamment avec des joints d'étanchéité, l'étanchéité entre la chambre de lubrification et les autres chambres, à savoir les chambres de détentes 11d, 21d et les chambres de compression 12d, 22d.

A noter que chaque carter 14, 24 peut être venu de matière en une seule pièce avec les parois de la chambres de compression 12d, 22d et de la chambre de détente 11d, 21d correspondantes.

Cependant aucune étanchéité n'étant absolue, au cours du fonctionnement des turbocompresseurs 10, 20, une partie des gaz A, E contenus dans les chambres de détente 11d, 21d et les chambres de compression 12d, 22d, vont fuir à l'intérieur des chambres de lubrification et donc des carters 14, 24 correspondants. Ces gaz de fuite sont les gaz appelés gaz de blow-by G.

Ces fuites risquent d'entrainer une surpression dans les carters, entrainant une fuite d'huile vers les chambres de compression 12d, 22d et de détente 11d, 21d.

Pour éviter cela, les carters 14, 24 sont agencés de manière à ce que les gaz de blow-by G et l'huile se séparent, ici dans les collecteurs 42, 43. Les gaz de blow-by G remontent de ce fait vers le haut de la chambre de lubrification pour en être évacués.

Ici, c'est le conduit de liaison 41 qui permet également l'évacuation des gaz de blow-by G du deuxième carter 24 via l'orifice de liaison 25, jusque dans le premier carter 14, notamment dans son collecteur 42.

Le premier carter 14 comprend, ici en haut, une sortie de gaz 15 communiquant avec sa chambre de lubrification et son collecteur 42. Cette sortie de gaz 15 est reliée via une unique gaine d'évacuation commune 45 à un décanteur 30 de gaz de blow-by monté sur la culasse 31 du moteur 3. Ce décanteur permet de récupérer les gouttelettes d'huile en suspension dans les gaz de blow-by G, avant que ces gaz G ne soit aspirés par les soupapes d'admission.

Comme le décanteur 30 est en communication avec les soupapes d'admission, cela met en dépression le circuit de recirculation des gaz de blow-by 40, qui comprend notamment la gaine d'évacuation commune 45 et le conduit de liaison 41. Ainsi, l'aspiration des gaz de blow-by G, ici vers le haut, est améliorée.

Pour améliorer davantage la mise en dépression du circuit de recirculation des gaz de blow-by 40, le décanteur 30 peut être connecté en entrée à l'un des compresseurs, ici celui du deuxième turbocompresseur 20.

Par exemple, la paroi du compresseur 22 du deuxième turbocompresseur 20 comprend une entrée de gaz secondaire 22c, en amont du rotor 28 correspondant. Cette entrée de gaz secondaire 22c est connectée au décanteur 30 via un conduit de repiquage 44.

Ainsi selon le mode de réalisation illustré, les deux turbocompresseurs 10, 20 sont reliés en série d'un côté au décanteur 30 de gaz de blow-by et de l'autre au bac 33.

Les deux turbocompresseurs 10, 20 forment un ensemble de compression présentant :
- une unique sortie de gaz 15 de blow-by hors de cette ensemble, ici en haut du premier carter 14, cette sortie de gaz 15 étant reliée par une unique conduite de recirculation de gaz de blow-by 40 au décanteur 30, et
- une unique sortie d'huile 24b hors de cette ensemble, ici en bas du deuxième carter 24, cette sortie 24b étant reliée par une unique conduite de retour d'huile au bac 33.

Selon l'invention, notamment dans cet exemple, la conduite de retour d'huile est un tuyau d'un diamètre intérieur inférieur à 15mm, notamment de 13 mm, voire de 8 mm. L'invention peut donc être particulièrement avantageuse en permettant d'employer un seul tuyau de ce type pour le retour d'huile depuis les deux turbocompresseurs.

Selon le mode de réalisation illustré, le circuit de retour d'huile et celui d'évacuation de gaz de blow-by sont agencés pour être en dépression, favorisant l'évacuation des gaz vers le haut et de l'huile vers le bas.

## Revendications

1. Système de compression (1) d'air de suralimentation d'un moteur (3) de véhicule comprenant un premier turbocompresseur (10) et un deuxième turbocompresseur (20), chaque turbocompresseur comprenant une turbine (11, 21), un compresseur (12, 22) relié à cette turbine par un organe d'entrainement (13, 23) mécanique, et un carter (14, 24) d'huile agencé autour de l'organe d'entrainement et comprenant une entrée d'huile (14a, 24a) et une sortie d'huile (14b, 24b), **caractérisé en ce que** ledit système (1) comprend une portion de circuit de retour d'huile reliant le deuxième turbocompresseur (20) au premier turbocompresseur (10) et destinée à être connectée à un décanteur de gaz (30) de manière à relier le deuxième puis le premier turbocompresseur en série au dit décanteur, et
**en ce que** les premier et deuxième turbocompresseurs (10, 20) forment un ensemble de compression, le carter (14) du premier turbocompresseur (10) comprenant une sortie de gaz (15) à distance de la sortie d'huile (14b) de ce carter (14) et cette sortie de gaz (15) formant l'unique évacuation de gaz hors de cet ensemble de compression.

2. Système de compression selon la revendication 1, dans lequel l'un des turbocompresseurs (10, 20) comprend une entrée de gaz principale (22a) et une entrée de gaz secondaire (22c) destinée à être reliée au décanteur de gaz (30).

3. Système de compression selon la revendication 1 ou 2, dans lequel la portion de circuit de retour d'huile relie une sortie d'huile du carter (14) du premier turbocompresseur (10) à un orifice du carter (24) du deuxième turbocompresseur (20), dit orifice de liaison (25), l'orifice de liaison étant distinct de l'entrée d'huile (24a) du carter (24) du deuxième turbocompresseur.

4. Système de compression selon l'une quelconque des revendications précédentes, dans lequel les premier et deuxième turbocompresseurs (10, 20) forment un ensemble de compression, la sortie d'huile (24b) du carter (24) du deuxième turbocompresseur (20) formant l'unique évacuation d'huile hors de cet ensemble de compression.

5. Ensemble moteur (2) comprenant un moteur (3) thermique et un système de compression (1) selon l'une quelconque des revendications précédentes, dans lequel la portion de circuit de retour d'huile est connectée à un décanteur de gaz (30) de manière à relier le deuxième turbocompresseurs (20) puis le premier turbocompresseurs (10) en série au dit décanteur de gaz (30).

6. Ensemble moteur selon la revendication 5, dans lequel :
- le moteur (3) présente un compartiment d'huile (33) relié à une pompe (36) qui est agencée de manière à envoyer l'huile vers les entrées d'huile (14a, 24a) des carters (14, 24) des turbocompresseurs (10, 20), et
- la sortie d'huile (14b, 24b) du carter (24) du deuxième turbocompresseur (20) est reliée au compartiment d'huile (33) sous le niveau d'huile (35) de ce dernier.

7. Ensemble moteur selon la revendication 5 ou 6, dans lequel l'un des turbocompresseurs (10, 20) comprend un conduit (44) en amont de son compresseur (22) permettant l'aspiration des gaz en une sortie du décanteur de gaz (30).

8. Ensemble moteur selon la revendication 7, dans lequel le deuxième turbocompresseur (20) présente un carter de lubrification (24) agencé autour de l'organe d'entrainement correspondant (23) et en communication aéraulique avec une entrée (22c) du compresseur (22) du deuxième turbocompresseur.

9. Ensemble moteur selon l'une quelconque des revendications 5 à 8, dans lequel le premier et le deuxième turbocompresseurs (10, 20) sont agencés de manière à ce que l'huile s'évacue par gravité du carter (14) du premier turbocompresseur (10) jusque dans le carter (24) du deuxième turbocompresseur (20).

10. Véhicule comprenant un système de compression (1) et/ou un ensemble moteur (2) selon l'une des revendications précédentes.
